# EUROPÄISCHE PATENTSCHRIFT

(11) **EP 0 813 480 B1**
(45) Veröffentlichungstag und Bekanntmachung des Hinweises auf die Patenterteilung: **17.11.1999**
(21) Anmeldenummer: 96907427.7
(22) Anmeldetag: 11.03.1996
(51) Int. Cl.: B60S 3/04, B08B 1/04

(54) **REINIGUNGSVORRICHTUNG FÜR RÄDER**
CLEANING DEVICE FOR WHEELS
INSTALLATION DE NETTOYAGE POUR ROUES

(30) Priorität: 09.03.1995 DE 29504112 U
(43) Veröffentlichungstag der Anmeldung: 29.12.1997
(73) Patentinhaber: Schaal GmbH Fördertechnik, 83624 Otterfing (DE)
(72) Erfinder: SCHAAL, Valentin, D-83624 Otterfing (DE)
(74) Vertreter: Grünecker, Kinkeldey, Stockmair & Schwanhäusser Anwaltssozietät
(86) Internationale Anmeldenummer: EP9601035
(87) Internationale Veröffentlichungsnummer: WO9628324

(56) Entgegenhaltungen:
- EP-A- 0 338 509
- WO-A-90/11210
- DE-A- 2 355 763
- DE-A- 2 426 415
- US-A- 4 173 053
- US-A- 5 098 744

## Beschreibung

Die Erfindung betrifft eine Reinigungsvorrichtung für Räder mit wenigstens einer in einer Reinigungskammer angeordneten Aufnahmeeinrichtung zur Aufnahme eines Rades, in welcher Reinigungskammer zumindest eine insbesondere einer Radfelge zuordbare Waschvorrichtung angeordnet ist.

Aus der WO-A-90/11210 ist eine solche Reinigungsvorrichtung bekannt. Bei dieser wird ein Rad manuell in die Reinigungskammer eingebracht, wobei das Rad bevorzugt vertikal ausgerichtet ist. Innerhalb der Reinigungskammer sind als Aufnahmeeinrichtung für das Rad drei Rollen im wesentlichen in den Ecken eines gleichseitigen oder gleichschenkligen Dreiecks angeordnet. Auf zwei untere beabstandete Rollen wird das Rad mit seiner Lauffläche aufgestellt und eine dritte Rolle wird gegenüberliegend zu den beiden anderen Rollen an die Lauffläche angedrückt. Dadurch wird das Rad an drei Stellen seines Umfangs gehalten. In der Regel ist eine der Rollen angetrieben, so daß das Rad in Kontakt mit den drei Rollen gedreht wird.

Die in der Reinigungskammer angeordnete Waschvorrichtung weist bei dem bekannten Stand der Technik auf einer Seite der Radfelge eine rotierende Düse und auf der anderen Seite eine an die Radfelge heranschwenkhare Bürste auf. Durch die Düsen und die Bürste wird die Radfelge während mehrerer Umdrehungen des Rades gereinigt. Nach Beendigung des Reinigungsvorgangs wird die verschwenkbare Bürste vom Rad entfernt, die auf die Lauffläche des Rades angedrückte Rolle abgehoben und das Rad der Reinigungskammer entnommen.

Nachteilig bei der vorbekannten Reinigungsvorrichtung ist, daß das Rad manuell bis praktisch in seine Waschstellung in die Reinigungskammer eingebracht und anschließend wieder aus dieser Stellung herausgenommen wird. Dadurch besteht die Möglichkeit, daß die Bedienperson mit in der Reinigungskammer befindlichem Wasser und/oder entsprechenden Reinigungsmitteln in Kontakt kommt. Wird das Rad beispielsweise durch ein Heißwasser- oder Dampfstrahlgerät gereinigt, kann die Bedienperson außerdem mit noch erhitzten Teilen der Reinigungskammer in Kontakt kommen und sich so verletzen.

Ein weiterer Nachteil ist, daß während des Waschvorgangs sowohl das Rad als auch die Düsen beziehungsweise Bürsten zur Reinigung der Radfelge gedreht werden müssen. Dies ist konstruktiv relativ aufwendig und der Energieverbrauch ist relativ hoch.

Der Erfindung liegt daher die Aufgabe zugrunde, eine Reinigungsvorrichtung der eingangs genannten Art dahingehend zu verbessern, daß ein Naßwerden oder gar Verletzen einer Bedienperson verhindert und gleichzeitig die Reinigungsvorrichtung konstruktiv einfacher und mit geringerem Energieverbrauch ausgebildet ist.

Diese Aufgabe wird bei einer Reinigungsvorrichtung mit den Merkmalen des Oberbegriffs des Anspruchs 1 dadurch gelöst, daß die Aufnahmeeinrichtung in der Reinigungskammer zwischen einer Aufnahmestellung und einer Reinigungsstellung verschwenkbar gelagert ist und daß die Aufnahmeeinrichtung wenigstens zwei zwischen einer Klemmstellung und einer Freigabestellung verstellbare Klemmittel zum Halten des Rades aufweist, welche zumindest während des Verschwenkens der Aufnahmeeinrichtung von der Aufnahmestellung in die Reinigungsstellung in ihrer Klemmstellung angeordnet sind.

Durch die Verschwenkbarkeit der Aufnahmeeinrichtung erfolgt ein Waschen des Rades in einer anderen Position als die Aufnahme des Rades. Dadurch kann die Bedienperson, die das Rad der Aufnahmeeinrichtung in ihrer Aufnahmestellung zuführt, nicht mehr mit der eigentlichen Waschvorrichtung in Kontakt kommen. Dadurch ist ein Naßwerden weitestgehend vermieden und die Verletzungsgefahr durch Heißwasser oder erhitzte Teile der Reinigungskammer praktisch ausgeschlossen. Weiterhin ist eine drehbare Lagerung des Rades durch eine Anzahl von Rollen nicht mehr notwendig. Durch die entsprechenden Klemmittel der Aufnahmeeinrichtung wird das Rad gehalten und höchstens die zur Waschvorrichtung gehörenden Teile, wie rotierende Düsen, rotierende Bürsten oder dergleichen, werden gedreht.

Bevorzugt ist dabei, daß in der Reinigungskammer zwei Aufnahmeeinrichtungen nebeneinander angeordnet sind, so daß jeweils gleichzeitig ein Paar Reifen gereinigt werden kann. Ebenso ist es möglich, gleichzeitig einen kompletten Satz, das heißt, vier Reifen, eines Kraftfahrzeuges durch eine entsprechende Anzahl von Aufnahmeeinrichtungen in einer Reinigungskammer zu reinigen.

Um die vertikale Ausrichtung des Rads beizubehalten und dadurch die Konstruktion einfach zu gestalten, ist eine Lagerung der Aufnahmeeinrichtung an einer im wesentlichen horizontalen Achse günstig. Auf diese Weise sind Aufnahmestellung und Reinigungsstellung der Aufnahmeeinrichtung in unterschiedlichen Höhen angeordnet, so daß beispielsweise die Aufnahmeeinrichtung mit dem gehaltenen Rad aus der höher angeordneten Aufnahmestellung nach unten in einfacher Weise in die Reinigungsstellung geschwenkt werden kann. Natürlich ist auch eine umgekehrte Anordnung von Aufnahmestellung und Reinigungsstellung möglich.

In diesem Zusammenhang ist es weiterhin günstig, wenn die Aufnahmevorrichtungen an der horizontalen Achse drehfest befestigt sind und diese in der Reinigungskammer verschwenkbar gelagert ist. Auf diese Weise muß nicht jede Aufnahmevorrichtung separat verschwenkt werden, sondern alle Aufnahmevorrichtungen werden gleichzeitig durch Drehen der horizontalen Achse verschwenkt.

Bei einem einfachen Ausführungsbeispiel der Aufnahmeeinrichtung weist diese einen im wesentlichen senkrecht zur horizontalen Achse verlaufenden Querträger auf, an dessen beiden Enden die Klemmittel verstellbar gelagert sind. Die Klemmittel sind dabei bevorzugt an den Reifenmantel anlegbar und halten diesen in ihrer Klemmstellung, so daß die Aufnahmeeinrichtung anschließend zwischen Aufnahmestellung und Reinigungsstellung verschwenkbar ist.

Ein bevorzugtes Ausführungsbeispiel zeichnet sich dadurch aus, daß die Klemmittel als im wesentlichen senkrecht vom Querträger abstehende Klemmarme ausgebildet sind, welche in ihrer Klemmstellung mit einander im wesentlichen gegenüberliegenden Abschnitten einer Lauffläche des Rades in Anlage sind. Auf diese Weise werden die Klemmarme einfach an die Lauffläche des Rades angedrückt, wodurch das Rad gehalten ist.

Um das geklemmte Halten des Rades zu verbessern, kann jeder Klemmarm an seinem freien Ende eine an die Lauffläche des Rades anlegbare Spannbacke aufweisen. Das Halten wird weiterhin dadurch verbessert, daß die Spannbacke eine konkav gekrümmte Anlagefläche aufweist. Die Krümmung entspricht dabei im wesentlichen der Krümmung der Lauffläche.

Um das Rad seitlich abzustützen und die Positionierung des Rades relativ zu den Spannbacken zu vereinfachen, ist es weiterhin von Vorteil, wenn die Spannbacke wenigstens zwei an gegenüberliegenden Seiten der Anlagefläche abstehende Halteflansche aufweist.

Um die Verstellbarkeit der Klemmarme relativ zum Querträger in einfacher Weise zu realisieren, ist jeder der Klemmarme an einer entlang des Querträgers verschiebbaren Schiebehülse befestigt. In der Freigabestellung des Klemmittels sind die entsprechenden Schiebehülsen an den Enden des Querträgers dabei weiter voneinander beabstandet, als in der entsprechenden Klemmstellung. Die Befestigung von Klemmarm und Schiebehülse kann durch Schweißen erfolgen. Ebenso ist eine lösbare Befestigung durch Schrauben oder andere geeignete Mittel möglich.

Um in einfacher Weise die Schiebehülsen relativ zum Querträger drehsicher zu halten, ist ein eckiger Querschnitt des Querträgers von Vorteil. Mögliche Querschnittsformen sind beispielsweise dreieckig, quadratisch, rechteckig usw..

Um die Schiebehülsen entlang des Querträgers einfache bewegen zu können, kann beispielsweise jeder Schiebehülse eine Kolben-Zylinder-Einheit zugeordnet werden. Bewegt sich der Kolben relativ zum Zylinder wird dabei die Schiebehülse relativ zum Querträger bewegt. Die Kolben-Zylinder-Einheit kann pneumatisch oder hydraulisch betätigt werden. Von Vorteil ist, wenn durch eine Kolben-Zylinder-Einheit beide Schiebehülsen eines Querträgers verstellbar sind. Dies kann beispielsweise durch eine doppelwirkende Kolben-Zylinder-Einheit erfolgen, die mit beiden Schiebehülsen bewegungsverbunden ist.

Bei einem bevorzugten Ausführungsbeispiel ist die Kolben-Zylinder-Einheit im wesentlichen senkrecht zum Querträger angeordnet und über Verbindungsarme mit den Schiebehülsen verbunden. Wird der Kolben in diesem Zusammenhang weiter aus dem Zylinder ausgeschoben, das heißt, entfernt er sich senkrecht vom Querträger, werden die mit dem Kolben über die Verbindungsarme verbundenen Schiebehülsen näher zur Mitte des Querträgers bewegt. Die umgekehrte Bewegung erfolgt analog.

Um bei einem Paar von Rädern oder beispielsweise vier Rädern gleichzeitig alle Räder durch die Klemmittel zu halten, erweist es sich als Vorteil, wenn die Kolben-Zylinder-Einheiten der jeweiligen Aufnahmeeinrichtung gleichzeitig betätigbar sind.

Bei einem Ausführungsbeispiel der Erfindung kann die Waschvorrichtung der Radfelge eines von der Aufnahmeeinrichtung in Reinigungsstellung gehaltenen Rades zugeordnet werden. Um die Zuordnung zu vereinfachen, kann die Waschvorrichtung wenigstens eine an einer Seitenwand der Reinigungsvorrichtung drehbar gelagerte Festbürste aufweisen. In diesem Fall muß die Festbürste zum Reinigen einer Felgenseite nicht speziell verschwenkbar oder verstellbar gelagert sein. Die Festbürste ist so angeordnet, daßsie bei Aufnahmeeinrichtung in Reinigungsstellung mit der einen Felgenseite in Kontakt ist. Zur beidseitigen Reinigung der Felge weist die Waschvorrichtung eine der Festbürste gegenüberliegende, drehbar gelagerte Gegenbürste auf.

Statt der Festbürste oder Gegenbürste oder zusätzlich zu diesen Bürsten können außerdem Waschdüsen oder Spritzdüsen angeordnet werden, die zusätzlich zu den Bürsten die Reinigung unterstützen. Die entsprechenden Düsen können auch in den Bürsten integriert sein. Weiterhin können andere Bürsten oder Düsen gleichzeitig zur Reinigung der Felge den Reifenmantel reinigen. Zur Zudosierung von einem Reinigungsmittel kann die Waschvorrichtung eine entsprechende Einrichtung aufweisen.

Um ein Verschwenken der Aufnahmeeinrichtung in beziehungsweise aus der Reinigungsstellung mit gehaltenem Rad zu vereinfachen, ist es in diesem Zusammenhang weiterhin von Vorteil, wenn die Gegenbürste in Richtung ihrer Drehachse verschiebbar gelagert ist. Bevor die Aufnahmeeinrichtung in die Reinigungsstellung einschwenkt, ist die Gegenbürste in einem größeren Abstand zur Festbürste angeordnet, so daß ein ausreichender Freiraum zwischen diesen zur Aufnahme eines Rades gebildet ist. Befindet sich dann die Aufnahmeeinrichtung in Reinigungsstellung, wird die Gegenbürste an die Festbürste angenähert und der entsprechenden Felge zu deren Reinigung zugeordnet.

Zur einfachen Lagerung der Gegenbürste kann die zugehörige Drehachse an einem oberen Ende eines im wesentlichen mittig zwischen zwei Aufnahmeeinrichtungen angeordneten Bürstenträgers gelagert sein. In diesem Zusammenhang ist es weiterhin von Vorteil, wenn an beiden Enden der Drehachse eine Gegenbürste verschiebbar gelagert ist. Dadurch wird das gleichzeitige Reinigen von einem Paar von Rädern erleichert und vereinfacht.

Um die Gegenbürste einfach zu gestalten und gleichzeitig sicherzustellen, daß Gegenbürste und Drehachse sich zusammen drehen, ist jede Gegenbürste auf einer mit der Drehachse bewegungsverbundenen Verschiebekappe angeordnet. Die Bewegungsverbindung kann beispielsweise über eine Verzahnung zwischen Verschiebekappe und Drehachse erfolgen.

Analog zu den Schiebehülsen bei der Aufnahmeeinrichtung kann am oberen Ende des Bürstenträgers eine mit beiden Verschiebekappen bewegungsverbundene Kolben-Zylinder-Einheit angeordnet werden. Diese kann als doppelwirkende Einheit ausgebildet sein oder wieder analog zur Aufnahmeeinrichtung als einzelne Kolben-Zylinder-Einheit mit zwischen dieser und der jeweiligen Verschiebekappe angeordneten Verbindungsarmen ausgebildet sein.

Um in einfacher Weise die Drehung der Verschiebekappe relativ zum Verbindungsarm zu ermöglichen, ist bei einem einfachen Ausführungsbeispiel ein der Verschiebekappe zugeordnetes Ende des Verbindungsarm an einem Schleifring angelenkt, welcher in axialer Richtung im wesentlichen unverschieblich an der Verschiebekappe drehbar gelagert ist.

Um nach dem Waschvorgang das Rad aus der Reinigungskammer entnehmen zu können, kann beispielsweise die Aufnahmeeinrichtung aus ihrer Reinigungsstellung zurück in die Aufnahmestellung geschwenkt und dort das Rad von einer Bedienperson entnommen werden. Bei einem einfachen Ausführungsbeispiel ist in der Reinigungskammer unterhalb der in Reinigungsstellung positionierten Aufnahmeeinrichtung eine Auswurframpe angeordnet. Nach Beendigung des Waschvorgangs können somit die Klemmittel in Reinigungsstellung der Aufnahmeeinrichtung in ihre Freigabestellung verstellt werden, wodurch das Rad freigegeben wird und entlang der Auswurframpe selbsttätig aus der Reinigungskammer ausrollen kann.

Bei der eingangs erwähnten, aus der Praxis bekannten Reinigungsvorrichtung ist die Reinigungskammer von einem Gehäuse umgeben, welches wenigstens eine der Aufnahmeeinrichtung zugeordnete Einführöffnung zur Einführung eines Rades aufweist. Ein solches Gehäuse kann in gleicher Weise bei der erfindungsgemäßen Reinigungsvorrichtung vorgesehen sein. In diesem Zusammenhang ist es weiterhin von Vorteil, wenn das Gehäuse wenigstens eine einem Auswurfende der Auswurframpe zugeordnete Auswurföffnung aufweist. Durch diese kann das Rad nach Freigabe in Reinigungsstellung der Aufnahmeeinrichtung selbsttätig ausrollen und außerhalb des Gehäuses von einer Bedienperson in Empfang genommen werden.

Bevorzugt sind dabei Einführöffnungen und Auswurföffnungen in einer Vorderwand des Gehäuses übereinander angeordnet. Dadurch ist die gesamte Reinigungsvorrichtung relativ kompakt, wobei die Einführöffnungen oberhalb der Auswurföffnungen angeordnet sind und die Aufnahmeeinrichtung aus einer der Einführöffnung zugeordneten Aufnahmestellung nach unten in die Reinigungsstellung verschwenkt wird. Nach Beendigung des Waschvorgangs wird das Rad freigegeben, kann beispielsweise auf die Auswurframpe fallen und mit oder ohne Unterstützung der in Aufnahmestellung zurückzuschwenkenden Aufnahmeeinrichtung entlang der Auswurframpe zur Auswurföffnung rollen und dort die Reinigungsvorrichtung verlassen.

Um das Einführen des Rades beziehungsweise dessen Ausrollen aus der Reinigungsvorrichtung zu unterstützen, können zumindest einseitig von Einführöffnung und/oder Auswurföffnung innerhalb des Gehäuses Radführungen angeordnet sein. Diese unterstützen beispielsweise beim Einführen eines Rades durch die Einführöffnung die genaue Zuordnung zur Aufnahmeeinrichtung mit den entsprechenden Klemmitteln.

Um das Einführen beziehungsweise Ausrollen des Rades dabei zu erleichtern, kann die Radführung aus wenigstens einer an der Seitenwand des Gehäuses drehbar gelagerten Führungsrolle gebildet sein.

Um gleichzeitig eine Führung beim Verschwenken der Aufnahmeeinrichtung zwischen Aufnahmestellung und Reinigungsstellung zu ermöglichen, kann die Radführung beispielsweise zwei Führungsrollen aufweisen, die an der entsprechenden Seitenwand drehbar gelagert sind, wobei deren Drehachsen unter einem spitzen Winkel angeordnet sind und im wesentlichen in Richtung zur Drehachse der Aufnahmeeinrichtung weisen. Wird die Aufnahmeeinrichtung von Aufnahmestellung in Reinigungsstellung verschwenkt, rollt der Mantel des gehaltenen Rades über die Führungsrollen ab, wodurch eine zusätzliche seitliche Führung gegeben ist.

Die erfindungsgemäße Reinigungsvorrichtung kann beispielsweise weiterhin Luftdüsen aufweisen, die nach Beendigung des Waschvorgangs das gereinigte Rad trocknen. Weiterhin kann das verbrauchte Schmutzwasser durch einen entsprechenden Wasserkreislauf mit Rücklaufpumpe und nach einer entsprechenden Reinigung wieder verwendet werden.

Zur Steuerung der Reinigungsvorrichtung ist eine entsprechende elektronische Steuerung vorgesehen, die beispielsweise über entsprechende Druckknöpfe, Schalter oder dergleichen an der Außenseite des Gehäuses betätigbar ist. Dabei können durch die Knöpfe beziehungsweise Schalter verschiedene Programme zur Reinigung eines verschmutzten Rades auswählbar sein. Weiterhin können zugeordnete Signaleinrichtungen, wie Lampen, angeordnet sein, um den Ablauf des Reinigungsvorgangs zu überwachen und anzuzeigen.

Im folgenden wird ein Ausführungsbeispiel der Erfindung anhand der in der Zeichnung beigefügten Figuren näher erläutert und beschrieben.

Es zeigen:
- Figur 1: eine perspektivische Ansicht eines Ausführungsbeispiels der erfindungsgemäßen Reinigungsvorrichtung;
- Figur 2: einen Schnitt entlang der Linie II-II aus Figur 1;
- Figur 3: einen Schnitt entlang der Linie III-III aus Figur 1, und
- Figur 4: eine vergrößerte Detailansicht eines Teils einer in der Reinigungsvorrichtung verwendeten Aufnahmeeinrichtung.

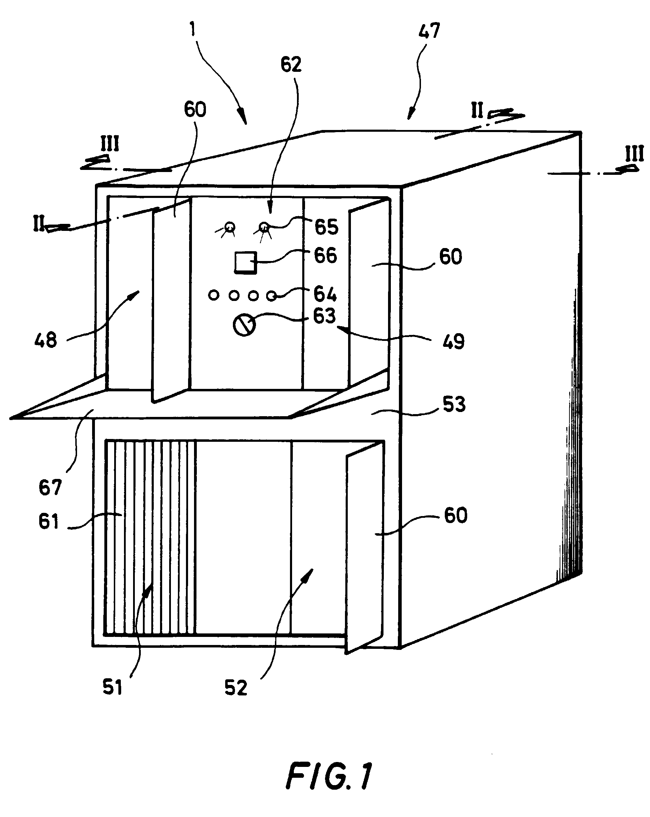

Die Reinigungsvorrichtung 1 gemäß der Erfindung weist nach Figur 1 ein im wesentlichen quaderförmiges Gehäuse 47 auf. In dessen Vorderwand 53 sind zwei Einführöffnungen 48 und 49 und zwei Auswurföffnungen 51 und 52 ausgebildet. Die jeweiligen Öffnungen sind beabstandet voneinander benachbart zu Seitenwänden des Gehäuses angeordnet und im wesentlichen rechteckförmig.

Die Einführöffnungen 48 und 49 sind in einer oberen Hälfte und die Auswurföffnungen 51 und 52 in einer unteren Hälfte der Vorderwand 53 angeordnet. Die Öffnungen sind durch Pendeltüren 60 verschließbar, wobei die Pendeltüren in Richtung Schließstellung federbelastet sein können.

Statt Pendeltüren kann beispielsweise auch ein bei der Auswurföffnung 51 dargestellter Streifenvorhang 61 aus einer Vielzahl von parallelen, im wesentlichen vertikalen Kunststoffstreifen angeordnet sein.

Zwischen den Einführöffnungen 48 und 49 ist ein Steuerpaneel 62 angebracht, hinter welchem die Steuereinrichtung für die Reinigungsvorrichtung angeordnet ist. Das Steuerpaneel weist einen Programmwahlknopf 63, eine Anzahl von Tastknöpfen 64, zwei Anzeigelampen 65 und ein Meßinstrument 66 auf. Die Anordnung und Auswahl der verschiedenen Knöpfe und Lampen sowie des Meßinstruments sind nur beispielhaft dargestellt.

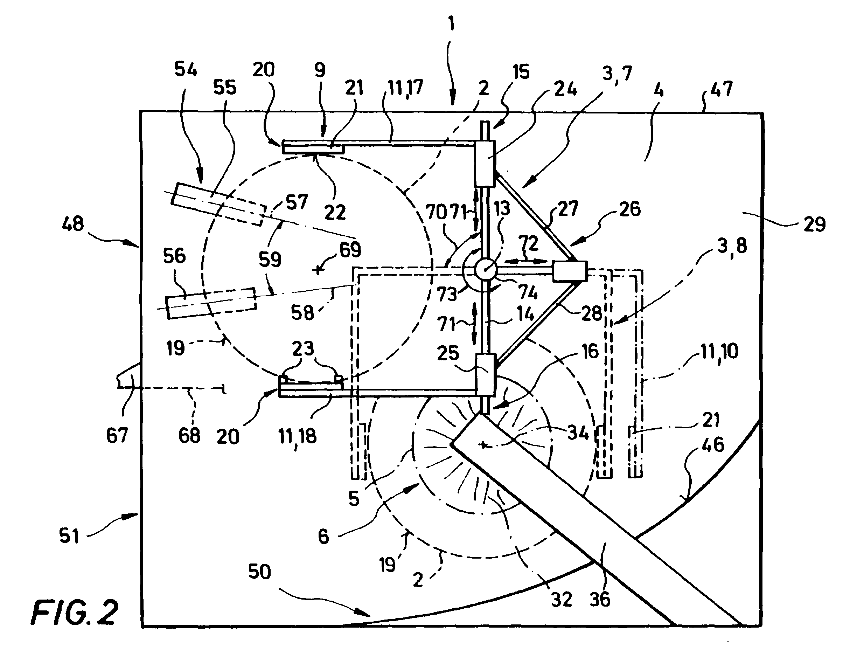

Figur 2 zeigt einen Schnitt entlang der Linie II-II aus Figur 1, wobei die Einrichtungen innerhalb des Gehäuses 47 hinter Einführöffnung 48 und Auswurföffnung 51 dargestellt sind.

Eine Überrollrampe 68 kann sich zwischen dem von der Vorderwand 53 des Gehäuses 47 nach vorne abstehenden Aufsetzblech 67 bis benachbart zu einer Aufnahmeeinrichtung 3 erstrecken. Diese ist einmal mit ausgezogener Linie in ihrer Aufnahmestellung 7 und mit gestrichelter Linie in ihrer Reinigungsstellung 8 dargestellt.

In der Aufnahmestellung 7 weist die Aufnahmeeinrichtung 3 mit ihren beiden als Klemmarmen 17 und 18 ausgebildeten Klemmitteln 11 in Richtung zur Einführöffnung 48, um ein Rad 2 aufzunehmen. Die Klemmarme weisen an ihren freien Enden 20 Spannbacken 21 auf, die an einer Lauffläche 19 des Rades 2 einander gegenüberliegend anliegen, wodurch das Rad 2 in Klemmstellung 9 der Klemmarme 17 und 18 gehalten ist. Die Spannbacken 21 weisen eine Anlagefläche 22 auf, die entsprechend zur Krümmung der Lauffläche 19 des Rades 2 konkav gekrümmt sein kann. Weiterhin können an gegenüberliegenden Seiten der Anlageflächen 22 jeweils zwei Halteflansche 23 angeordnet sein, die seitlich zur Lauffläche 19 mit einem Mantel des Rades 2 in Anlage sind.

Die Klemmarme 17 und 18 sind mit ihren den freien Enden 20 gegenüberliegenden Enden an Schiebehülsen 24 und 25 befestigt. Diese sind entlang eines Querträgers 14 in Richtungen 71 verschiebbar gelagert. Die Schiebehülsen sind in Klemmstellung 9 der Klemmarme 17 und 18 beabstandet von Enden 15 beziehungsweise 16 des Querträgers 14 angeordnet. Auf ihrer den Klemmarmen gegenüberliegenden Seite sind die Schiebehülsen 24 und 25 mittels Verbindungsarmen 27 und 28 mit einer Kolben-Zylinder-Einheit 26 bewegungsverbunden. Die Verbindungsarme 27 und 28 sind an ihren Enden jeweils verschwenkbar an der entsprechenden Schiebehülse beziehungsweise an der Kolben-Zylinder-Einheit 26 verschwenkbar gelagert. Ein Teil der Kolben-Zylinder-Einheit 26 ist in Bewegungsrichtung 72 verschiebbar gelagert, wodurch über die Bewegungsverbindung mittels der Verbindungsarme 27 und 28 die Schiebehülsen 24 und 25 in Richtungen 71 entlang des Querträgers 14 verschiebbar sind.

Die Kolben-Zylinder-Einheit 26 ist an einer Lagerbuchse 74 befestigt. Diese ist in etwa mittig zum Querträger 14 und konzentrisch zu einer horizontalen Achse 13 angeordnet. Um diese horizontale Achse 13 ist die Aufnahmeeinrichtung 3 aus ihrer Aufnahmestellung 7 in die gestrichelt dargestellte Reinigungsstellung 8 in Schwenkrichtung 73 verschwenkbar. Der zugehörige Schwenkwinkel 70 beträgt etwa 90°.

Zwischen Einführöffnung 48 und Aufnahmeeinrichtung 3 ist eine Radführung 54 ausgebildet, die durch zwei an einer Seitenwand 29 einer vom Gehäuse 47 nach Figur 1 umgebenen Reinigungskammer 4 drehbar gelagerte Führungsrollen 55 und 56 gebildet ist. Die Führungsrollen 55 und 56 sind so zueinander angeordnet, daß deren Drehachsen 57 und 58 einen spitzen Winkel 59 einschließen und sich in etwa in der Drehachse 13 für den Querträger 14 schneiden. Weiterhin sind die Führungsrollen 55 und 56 sowohl oberhalb als auch unterhalb eines Mittelpunkts 69 des Rades 2 angeordnet.

In der Reinigungsstellung 8 der Aufnahmeeinrichtung 3 weist diese mit ihren Klemmarmen 17 und 18 nach unten in Richtung einer Auswurframpe 46. Diese weist ein Gefälle in Richtung Auswurföffnung 51 auf, wobei sie mit ihrem Auswurfende 50 beabstandet zur Auswurföffnung 51 endet.

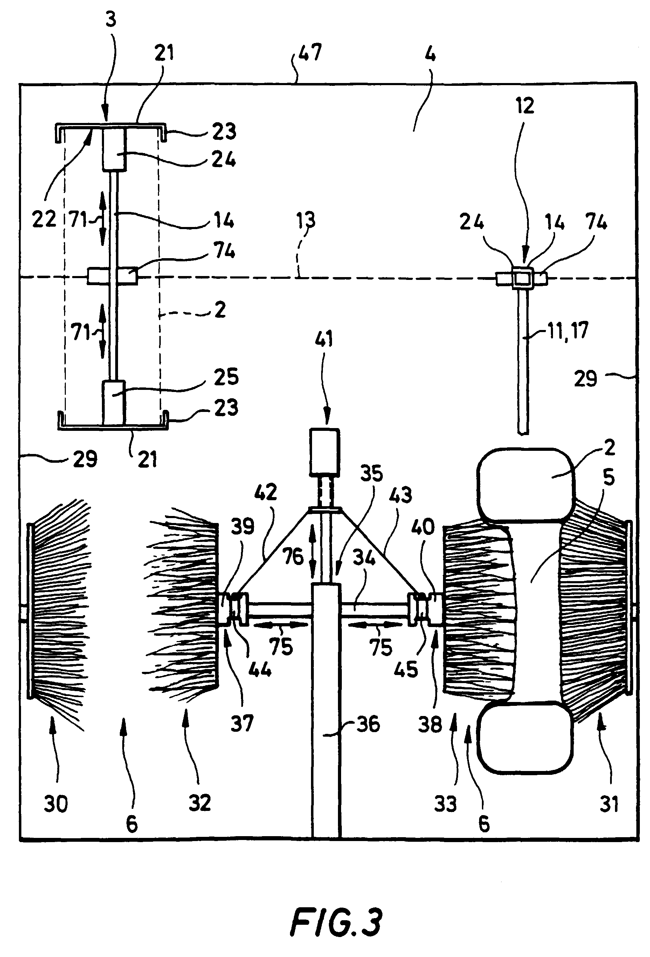

In der Reinigungsstellung 8 ist der Reifen 2 mit seiner Felge 5 einer Waschvorrichtung 6 zugeordnet, von der in Figur 3 eine um Drehachse 34 drehbare Gegenbürste 32 sichtbar ist. Diese ist an einem schräg nach vorne und nach oben in Richtung Einführöffnung 48 verlaufenden Bürstenträger 36 drehbar gelagert.

In der Reinigungsstellung 8 der Aufnahmeeinrichtung 3 sind die Klemmarme 17 und 18 so lange in ihrer Klemmstellung 9 angeordnet, bis der Reinigungsvorgang abgeschlossen ist. Anschließend sind die Klemmarme mittels der Kolben-Zylinder-Einheit 26 in ihre Freigabestellung 10, siehe die strichpunktierte Linie, verstellbar. Zur Vereinfachung ist die Freigabestellung 10 nur für ein Klemmittel 11 dargestellt, das dem Klemmarm 18 entspricht. In der Freigabestellung 10 sind die Spannbacken 21 beabstandet zur Lauffläche 19 des Rades 2 angeordnet, so daß das Rad 2 nach unten auf die Auswurframpe 46 fällt und darauffolgend entlang dieser Rampe abrollt und aus Auswurföffnung 51 austritt. Die vorangehend geschilderten Einrichtungen und Aktionen verlaufen analog für ein durch Einführöffnung 49 eingegebenes und durch Auswurföffnung 52 herauslaufendes Rad, siehe Figur 1.

In Figur 3 ist ein Schnitt entlang der Linie III-III aus Figur 1 dargestellt. Innerhalb des Gehäuses 47 sind nebeneinander Zwei Aufnahmeeinrichtungen 3 und 12 angeordnet, die im Prinzip gleichartig aufgebaut sind. Gleiche Bezugszeichen beschreiben gleiche Teile und werden nur noch teilweise erwähnt.

Die Aufnahmeeinrichtung 3 ist in ihrer Aufnahmestellung dargestellt, siehe Figur 2, während die Aufnahmeeinrichtung 12 in ihrer Reinigungsstellung 8 dargestellt ist, siehe ebenfalls Figur 2. Es sei angemerkt, daß in der Regel beide Aufnahmeeinrichtungen 3 und 12 in jeweils der gleichen Stellung angeordnet sind, so daß synchron zwei Räder aufgenommen beziehungsweise durch die entsprechende Waschvorrichtung 6 gereinigt werden. Dazu sind die Aufnahmeeinrichtungen 3 und 12 an der horizontalen Achse 13 durch die entsprechenden Lagerbuchsen 74 befestigt, wobei die Achse 13 an den Seitenwänden 29 der Reinigungskammer 4 beziehungsweise des Gehäuses 47 drehbar gelagert ist.

Unterhalb der Aufnahmeeinrichtung 3 und 12 sind die zugehörigen Waschvorrichtungen 6 ebenfalls paarweise angeordnet Jede der Waschvorrichtungen weist eine an einer Seitenwand 29 drehbar gelagerte Festbürste 30 beziehungsweise 31 und eine der jeweiligen Festbürste gegenüberliegende, ebenfalls drehbar gelagerte Gegenbürste 32 beziehungsweise 33 auf. Zusätzliche Heißwasser- oder Dampfdüsen, Dosiermittel für Reinigungsflüssigkeit oder Trocknungseinrichtungen sind zur Vereinfachung nicht dargestellt.

Die beiden Gegenbürsten 32 und 33 sind an gegenüberliegenden Enden 37 und 38 einer Drehachse 34 gelagert. Diese ist an einem oberen Ende 37 des Bürstenträgers 36 drehbar gelagert. Eine entsprechende Antriebseinheit für die Drehachse 34 kann im Prinzip an beliebiger Stelle innerhalb oder auch außerhalb des Gehäuses 47 angeordnet sein, wobei die Antriebsverbindung zur Drehachse 34 durch das Innere des Bürstenträgers 36 erfolgt.

An den jeweiligen Enden 37 und 38 der Drehachse 34 sind auf diese Verschiebekappen 39 und 40 aufgesteckt. An diesen sind die Gegenbürsten 32 und 33 lösbar befestigt. An ihren aufeinander zuweisenden Enden weisen die Verschiebekappen 39 und 40 eine umlaufende Nut auf, in der ein Schleifring 44 beziehungsweise 45 axial fest und drehbar relativ zu den Verschiebekappen gelagert ist. An jedem der Schleifringe 44 bis 45 ist ein Ende eines Verbindungsarms 42 beziehungsweise 43 angelenkt. Die Verbindungsarme 42, 43 erstrecken sich von dem jeweiligen Schleifring 44, 45 bis zu einer Kolben-Zylinder-Einheit 41. Diese ist am oberen Ende 35 des Bürstenträgers 36 angeordnet.

Durch Verschieben beispielsweise des Kolbens der Kolben-Zylinder-Einheit 41 in Richtungen 76 und durch die Bewegungsverbindung über Verbindungsarme 42 und 43 mit den Verschiebekappen 39 und 40, sind diese in Richtungen 45 entlang der Drehachse 34 verschiebbar.

Ist die Aufnahmeeinrichtung in ihrer Aufnahmestellung, ist die entsprechende Gegenbürste 32 von der zugehörigen Festbürste 30 mittels der Kolben-Zylinder-Einheit 41 zurückgezogen. Ist die Aufnahmeeinrichtung in ihrer Reinigungsstellung, wird die Gegenbürste 33 durch die Kolben-Zylinder-Einheit 41 an die Gegenbürste 31 angenähert, wodurch die Radfelge 5 beidseitig durch die Bürsten gereinigt werden kann.

Es sei nochmals darauf hingewiesen, daß durch die spezielle Ausbildung der Kolben-Zylinder-Einheiten beide Aufnahmeeinrichtungen 3 und 12 synchron verschwenkt werden und beide Gegenbürsten 32 und 33 jeweils an ihre zugehörige Gegenbürste 30 beziehungsweise 31 angenähert, beziehungsweise von dieser entfernt werden.

Bei dem in Figur 3 dargestellten Ausführungsbeispiel der Aufnahmeeinrichtung 12 ist erkennbar, daß Querträger 14 und auf diesem verschiebbar gelagerte Schiebehülse 24 einen quadratischen Querschnitt aufweisen. Dadurch ergibt sich eine einfache Drehsicherung zwischen Querträger und zugehöriger Schiebehülse.

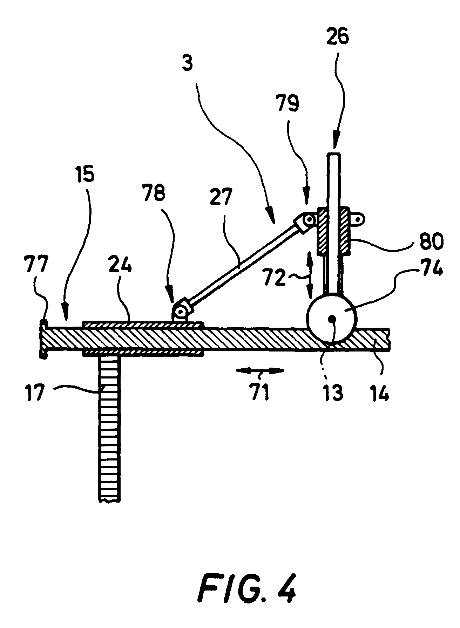

In Figur 4 ist eine Detaildarstellung eines Teils der Aufnahmeeinrichtung 3 dargestellt. Die Aufnahmeeinrichtung 12 ist analog aufgebaut. Gleiche Teile sind mit gleichen Bezugszeichen versehen und werden nur noch teilweise erwähnt.

Die Schiebehülse 24 ist beabstandet von einem Endanschlag 77 des Endes 15 des Querträgers 14 angeordnet. Auf ihrer Oberseite ist der Verbindungsarm 27 mit einem seiner Enden 78 verschwenkbar gelagert. Das andere Ende 79 des Verbindungsarms 27 ist an einem Kolben 80 der Kolben-Zylinder-Einheit 26 verschwenkbar gelagert. Die Kolben-Zylinder-Einheit 26 steht im wesentlichen senkrecht nach oben von der Lagerbuchse 24 ab, die konzentrisch zur horizontalen Drehachse 13 des Querträgers 14 angeordnet ist. Auf der Unterseite der Schiebehülse 24 ist der Klemmarm 17 an dieser befestigt.

Bei Bewegung des Kolbens 80 in Richtungen 72 bewegt sich die Schiebehülse 24 in Richtungen 71 entlang des Querträgers 14. Die in Figur 2 dargestellte Klemmstellung 9 der Klemmarme entspricht im wesentlichen einer Stellung der Schiebehülse 24, in der diese mit dem Endanschlag 77 in Anlage ist.

## Patentansprüche

1. Reinigungsvorrichtung (1) für Räder mit wenigstens einer in einer Reinigungskammer (4) angeordneten Aufnahmeeinrichtung (3) zur Aufnahme eines Rades, in welcher Reinigungskammer (4) zumindest eine insbesondere einer Radfelge (5) zuordbare Waschvorrichtung (6) angeordnet ist,
**dadurch gekennzeichnet**,
daß die Aufnahmeeinrichtung (3) in der Reinigungskammer (4) zwischen einer Aufnahmestellung (7) und einer Reinigungsstellung (8) verschwenkbar gelagert ist, und daß die Aufnahmeeinrichtung (3) wenigstens zwei zwischen einer Klemmstellung (9) und einer Freigabestellun g(10) verstellbare Klemmmittel (11) zum Halten des Rades (2) aufweist, welche zumindest während des Verschwenkens der Aufnahmeeinrichtung von der Aufnahmestellung in die Reinigungsstellung in ihrer Klemmstellung angeordnet sind.

2. Reinigungsvorrichtung nach Anspruch 1,
**dadurch gekennzeichnet**,
daß in der Reinigungskammer (4) zwei Aufnahmeeinrichtungen (3, 12) nebeneinander angeordnet sind.

3. Reinigungsvorrichtung nach Anspruch 2,
**dadurch gekennzeichnet**,
daß die Aufnahmeeinrichtungen (3, 12) an einer im wesentlichen horizontalen Achse (3) gelagert sind.

4. Reinigungsvorrichtung nach wenigstens einem der vorangehenden Ansprüche,
**dadurch gekennzeichnet**,
daß die Aufnahmevorrichtungen (3, 12) an der horizontalen Achse (13) befestigt sind und diese in der Reinigungskammer (4) verschwenkbar gelagert ist.

5. Reinigungsvorrichtung nach wenigstens einem der vorangehenden Ansprüche,
**dadurch gekennzeichnet**,
daß die Aufnahmevorrichtung (3, 12) einen im wesentlichen senkrecht zur horizontalen Achse (13) verlaufenden Querträger (14) aufweist, an dessen beiden Enden (15, 16) die Klemmittel (11) verstellbar gelagert sind.

6. Reinigungsvorrichtung nach wenigstens einem der vorangehenden Ansprüche,
**dadurch gekennzeichnet**,
daß die Klemmittel (11) als im wesentlichen senkrecht vom Querträger (14) abstehende Klemmarme (17, 18) ausgebildet sind, welche in ihrer Klemmstellung mit einander im wesentlichen gegenüberliegenden Abschnitten einer Lauffläche (19) des Rades (2) in Anlage sind.

7. Reinigungsvorrichtung nach wenigstens einem der vorangehenden Ansprüche,
**dadurch gekennzeichnet**,
daß jeder Klemmarm (17, 18) an seinem freien Ende (20) einen an die Lauffläche (19) des Rades (2) anlegbaren Spannbacken (21) aufweist.

8. Reinigungsvorrichtung nach wenigstens einem der vorangehenden Ansprüche,
**dadurch gekennzeichnet**, daß die Spannbacke (21) eine konkav gekrümmte Anlagefläche (22) aufweist.

9. Reinigungsvorrichtung nach wenigstens einem der vorangehenden Ansprüche,
**dadurch gekennzeichnet**,
daß die Spannbacke (21) wenigstens zwei an gegenüberliegenden Seiten der Anlagefläche (22) abstehende Halteflansche (23) aufweist.

10. Reinigungsvorrichtung nach wenigstens einem der vorangehenden Ansprüche,
**dadurch gekennzeichnet**,
daß jeder Klemmarm (17, 18) an einer entlang des Querträgers (14) verschiebbaren Schiebehülse (24, 25) befestigt ist.

11. Reinigungsvorrichtung nach wenigstens einem der vorangehenden Ansprüche,
**dadurch gekennzeichnet**,
daß der Querträger (14) einen eckigen Querschnitt aufweist.

12. Reinigungsvorrichtung nach wenigstens einem der vorangehenden Ansprüche,
**dadurch gekennzeichnet**,
daß in etwa mittig zum Querträger (14) eine mit den Schiebehülsen (24, 25) bewegungsverbundene Kolben-Zylinder-Einheit (26) angeordnet ist.

13. Reinigungsvorrichtung nach wenigstens einem der vorangehenden Ansprüche,
**dadurch gekennzeichnet**,
daß die Kolben-Zylinder-Einheit (26) im wesentlichen senkrecht zum Querträger (14) angeordnet ist und über Verbindungsarme (27, 28) mit den Schiebehülsen (24, 25) verbunden ist.

14. Reinigungsvorrichtung nach wenigstens einem der vorangehenden Ansprüche,
**dadurch gekennzeichnet**,
daß Kolben-Zylinder-Einheiten (26) der Aufnahmeeinrichtungen (3, 12) gleichzeitig betätigbar sind.

15. Reinigungsvorrichtung nach wenigstens einem der vorangehenden Ansprüche,
**dadurch gekennzeichnet**,
daß die Waschvorrichtung (6) der Radfelge (5) eines von der Aufnahmeeinrichtung (3, 12) in Reinigungsstellung (8) gehaltenen Rades (2) zuordbar ist.

16. Reinigungsvorrichtung nach wenigstens einem der vorangehenden Ansprüche,
**dadurch gekennzeichnet**,
daß die Waschvorrichtung (6) wenigstens eine an einer Seitenwand (29) der Reinigungskammer (4) drehbar gelagerte Festbürste (30, 31) aufweist.

17. Reinigungsvorrichtung nach wenigstens einem der vorangehenden Ansprüche,
**dadurch gekennzeichnet**,
daß die Waschvorrichtung (6) eine der Festbürste (30, 31) gegenüberliegende, drehbar gelagerte Gegenbürste (32, 33) aufweist.

18. Reinigungsvorrichtung nach wenigstens einem der vorangehenden Ansprüche,
**dadurch gekennzeichnet**,
daß die Gegenbürste (32, 33) in Richtung ihrer Drehachse (34) verschiebbar gelagert ist.

19. Reinigungsvorrichtung nach wenigstens einem der vorangehenden Ansprüche,
**dadurch gekennzeichnet**,
daß die Drehachse (34) an einem oberen Ende (35) eines im wesentlichen mittig zwischen zwei Aufnahmeeinrichtungen (3, 12) angeordneten Bürstenträger (36) gelagert ist.

20. Reinigungsvorrichtung nach wenigstens einem der vorangehenden Ansprüche,
**dadurch gekennzeichnet**,
daß an beiden Enden (37, 38) der Drehachse (34) eine Gegenbürste (32, 33) verschiebbar gelagert ist.

21. Reinigungsvorrichtung nach wenigstens einem der vorangehenden Ansprüche,
**dadurch gekennzeichnet**,
daß jede Gegenbürste (32, 33) auf einer mit der Drehachse (34) bewegungsverbundenen Verschiebekappe (39, 40) angeordnet ist.

22. Reinigungsvorrichtung nach wenigstens einem der vorangehenden Ansprüche,
**dadurch gekennzeichnet**,
daß am oberen Ende (35) des Bürstenträgers (36) eine mit beiden Verschiebekappen (39, 40) bewegungsverbundene Kolben-Zylinder-Einheit (41) angeordnet ist.

23. Reinigungsvorrichtung nach wenigstens einem der vorangehenden Ansprüche,
**dadurch gekennzeichnet**,
daß zwischen der Kolben-Zylinder-Einheit (41) und der jeweiligen Verschiebekappe (39, 40) ein Verbindungsarm (42, 43) angeordnet ist.

24. Reinigungsvorrichtung nach wenigstens einem der vorangehenden Ansprüche,
**dadurch gekennzeichnet**,
daß ein der Verschiebekappe (39, 40) zugeordnetes Ende des Verbindungsarms (42, 43) an einem Schleifring (44, 45) angelenkt ist, welcher in axialer Richtung im wesentlichen unverschieblich an der Verschiebekappe (39, 40) drehbar gelagert ist.

25. Reinigungsvorrichtung nach wenigstens einem der vorangehenden Ansprüche,
**dadurch gekennzeichnet**,
daß in der Reinigungskammer (4) unterhalb der in Reinigungsstellung positionierten Aufnahmeeinrichtung (3, 12) eine Auswurframpe (46) angeordnet ist.

26. Reinigungsvorrichtung mit einem die Reinigungskammer (4) umgebenden Gehäuse (47), welches wenigstens eine der Aufnahmeeinrichtung (3, 12) zugeordnete Einführöffnung (48, 49) zur Einführung eines Rades (2) aufweist, nach wenigstens einem der vorangehenden Ansprüche,
**dadurch gekennzeichnet**,
daß das Gehäuse (47) wenigstens eine einem Auswurfende (50) der Auswurframpe (46) zugeordnete Auswurföffnung (51, 52) aufweist.

27. Reinigungsvorrichtung nach wenigstens einem der vorangehenden Ansprüche,
**dadurch gekennzeichnet**,
daß Einführöffnung (48, 49) und Auswurföffnung (51, 52) in einer Vorderwand (53) des Gehäuses (47) übereinander angeordnet sind.

28. Reinigungsvorrichtung nach wenigstens einem der vorangehenden Ansprüche,
**dadurch gekennzeichnet**,
daß zumindest einseitig von Einführöffnung (48, 49) und/oder Auswurföffnung (51, 52) innerhalb des Gehäuses (47) eine Radführung (54) angeordnet ist.

29. Reinigungsvorrichtung nach wenigstens einem der vorangehenden Ansprüche,
**dadurch gekennzeichnet**,
daß die Radführung (54) als wenigstens eine an einer Seitenwand des Gehäuses (47) drehbar gelagerte Führungsrolle (55, 56) ausgebildet ist.

30. Reinigungsvorrichtung nach wenigstens einem der vorangehenden Ansprüche,
**dadurch gekennzeichnet**,
daß zwei Führungsrollen (55, 56) drehbar an der Seitenwand gelagert sind, deren Drehachsen (57, 58) unter einem spitzen Winkel (59) angeordnet sind und im wesentlichen in Richtung zur Drehachse (13) der Aufnahmeeinrichtung (3, 12) weisen.

## Claims

1. A cleaning apparatus (1) for wheels comprising at least one reception means (3) arranged in a cleaning chamber (4) and used for receiving a wheel, said cleaning chamber (4) having arranged therein at least one washing device (6) which is adapted to be associated especially with the rim (5) of a wheel,
**characterized in**
that the reception means (3) in the cleaning chamber (4) is supported such that it is pivotable between a receiving position (7) and a cleaning position (8) and that the reception means (3) comprises at least two clamping means (11) which are used for holding the wheel (2) and adapted to be displaced between a clamping position (9) and a release position (10), which are arranged in the clamping position at least during pivoting of the reception means (3) from receiving position to cleaning position.

2. A cleaning apparatus according to claim 1,
**characterized in**
that two reception means (3, 12) are arranged side by side in said cleaning chamber (4).

3. A cleaning apparatus according to claim 2,
**characterized in**
that the reception means (3, 19) are supported on a substantially horizontal axle.

4. A cleaning apparatus according to at least one of the preceding claims,
**characterized in**
that the reception means (3, 12) are secured to said horizontal axle (13) and that said horizontal axle (13) is pivotally supported in the cleaning chamber (4).

5. A cleaning apparatus according to at least one of the preceding claims,
**characterized in**
that the reception means (3, 12) includes a crossbar (14) which extends essentially at right angles to said horizontal axle (13) and at the two ends (15, 16) of which the clamping means (11) are displaceably supported.

6. A cleaning apparatus according to at least one of the preceding claims,
**characterized in**
that the clamping means (11) are implemented as clamping arms (17, 18) which project from the crossbar (14) essentially at right angles thereto and which are in contact with substantially opposed sections of a tread (19) of the wheel (2) when they are at their clamping position.

7. A cleaning apparatus according to at least one of the preceding claims,
**characterized in**
that each clamping arm (17, 18) has at the free end (20) thereof a clamping jaw (21) which is adapted to be brought into engagement with the tread (19) of the wheel (2).

8. A cleaning apparatus according to at least one of the preceding claims,
**characterized in**
that the clamping jaw (21) has a concave contact surface (22).

9. A cleaning apparatus according to at least one of the preceding claims,
**characterized in**
that the clamping jaw (21) is provided with at least two retaining flanges (23) projecting on opposite sides of the contact surface (22).

10. A cleaning apparatus according to at least one of the preceding claims,
**characterized in**
that each clamping arm (17, 18) is secured to a sliding sleeve (24, 25) which is adapted to be displaced along the crossbar (14).

11. A cleaning apparatus according to at least one of the preceding claims,
**characterized in**
that the crossbar (14) has an angular cross-section.

12. A cleaning apparatus according to at least one of the preceding claims,
**characterized in**
that a piston-cylinder unit (26) is arranged approximately centrally relative to the crossbar (14) and is connected to the sliding sleeves (24, 25) in a motion-transmitting manner.

13. A cleaning apparatus according to at least one of the preceding claims,
**characterized in**
that the piston-cylinder unit (26) is arranged essentially at right angles to the crossbar (14) and connected to the sliding sleeves (24, 25) via connection arms (27, 28).

14. A cleaning apparatus according to at least one of the preceding claims,
**characterized in**
that the piston-cylinder units (26) of the reception means (3, 12) are adapted to be operated simultaneously.

15. A cleaning apparatus according to at least one of the preceding claims,
**characterized in**
that the washing device (6) is adapted to be associated with the rim (5) of a wheel (2) held by the reception means (3, 12) at the cleaning position (8).

16. A cleaning apparatus according to at least one of the preceding claims,
**characterized in**
that the washing device (6) includes at least one stationary brush (30, 31) which is rotatably supported on a sidewall (29) of the cleaning chamber (4).

17. A cleaning apparatus according to at least one of the preceding claims,
**characterized in**
that the washing device (6) includes a rotatably supported counterbrush (32, 33) which is located opposite said stationary brush (30, 31).

18. A cleaning apparatus according to at least one of the preceding claims,
**characterized in**
that the counterbrush (32, 33) is supported such that it is adapted to be displaced in the direction of its rotating axle (34).

19. A cleaning apparatus according to at least one of the preceding claims,
**characterized in**
that the rotating axle (34) is supported on the upper end (35) of a brush carrier (36) which is arranged substantially centrally between two reception means (3, 12).

20. A cleaning apparatus according to at least one of the preceding claims,
**characterized in**
that respective counterbrushes (32, 33) are displaceably arranged on both ends (37, 38) of said rotating axle (34).

21. A cleaning apparatus according to at least one of the preceding claims,
**characterized in**
that each counterbrush (32, 33) is arranged on a displacement cap (39, 40) which is connected to the rotating axle (34) in a motion-transmitting manner.

22. A cleaning apparatus according to at least one of the preceding claims,
**characterized in**
that, at the upper end (35) of the brush carrier (36), a piston-cylinder unit (41) is arranged which is connected to both displacement caps (39, 40) in a motion-transmitting manner.

23. A cleaning apparatus according to at least one of the preceding claims,
**characterized in**
that a connection arm (42, 43) is arranged between the piston-cylinder unit (41) and the respective displacement cap (39, 40).

24. A cleaning apparatus according to at least one of the preceding claims,
**characterized in**
that a connection arm end which is associated with the displacement cap (39, 40) is articulated on a slip ring (44, 45) which is rotatably supported on the displacement cap (39, 40) such that it is substantially non-displaceable in the axial direction.

25. A cleaning apparatus according to at least one of the preceding claims,
**characterized in**
that a discharge ramp (46) is arranged in the cleaning chamber (4) below the reception means (3, 12), when said reception means (3, 12) is located at its cleaning position.

26. A cleaning apparatus comprising a housing (47) surrounding the cleaning chamber (4) and provided with at least one insertion opening (48, 49) used for inserting a wheel (2) and associated with the reception means (3, 12), according to at least one of the preceding claims,
**characterized in**
that the housing (47) is provided with at least one discharge opening (51, 52) that is associated with the discharge end (50) of the discharge ramp (46).

27. A cleaning apparatus according to at least one of the preceding claims,
**characterized in**
that the insertion opening (48, 49) and the discharge opening (51, 52) are arranged in a front wall (53) of the housing (47) one on top of the other.

28. A cleaning apparatus according to at least one of the preceding claims,
**characterized in**
that a wheel guide means (54) is arranged on at least one side of said insertion opening (48, 49) and/or said discharge opening (51, 52) in the interior of the housing (47).

29. A cleaning apparatus according to at least one of the preceding claims,
**characterized in**
that said wheel guide means (54) is implemented as at least one guide roller (55, 56) which is rotatably supported on a sidewall of the housing (47).

30. A cleaning apparatus according to at least one of the preceding claims,
**characterized in**
that two guide rollers (55, 56) are rotatably supported on said sidewall, the axes of rotation (57, 58) of said guide rollers extending at an acute angle (59) and being directed essentially towards the rotating axle (13) of the reception means (3, 12).

## Revendications

1. Dispositif (1) de nettoyage de roues comportant au moins un dispositif de réception (3) disposé dans une chambre de nettoyage (4), pour la réception d'une roue, au moins un dispositif de lavage (6), en particulier apte à être conjugué à une jante de roue (5), étant disposé dans ladite chambre de nettoyage (4), caractérisé en ce que le dispositif de réception (3) est monté dans la chambre de nettoyage (4) de manière à pouvoir pivoter entre une position de réception (7) et une position de nettoyage (8), et en ce que le dispositif de réception (3) présente au moins deux moyens de serrage (11) pour le maintien de la roue (2) aptes à être ajustés entre une position de serrage (9) et une position de libération (10), lesquels moyens de serrage sont disposés dans leur position de serrage au moins pendant le pivotement du dispositif de réception depuis la position de réception jusque dans la position de nettoyage.

2. Dispositif de nettoyage selon la revendication 1, caractérisé en ce que deux dispositifs de réception (3, 12) sont disposés l'un à côté de l'autre dans la chambre de nettoyage (4).

3. Dispositif de nettoyage selon la revendication 2, caractérisé en ce que les dispositifs de réception (3, 12) sont montés sur un axe (3) essentiellement horizontal.

4. Dispositif de nettoyage selon au moins l'une des revendications précédentes, caractérisé en ce que les dispositifs de réception (3, 12) sont-fixés sur l'axe horizontal (13), et ce dernier est monté dans la chambre de nettoyage (4) de manière à pouvoir pivoter,

5. Dispositif de nettoyage selon au moins l'une des revendications précédentes, caractérisé en ce que le dispositif de réception (3, 12) présente un support transversal (14) s'étendant essentiellement à la perpendiculaire de l'axe horizontal (13), aux deux extrémités (15, 16) duquel les moyens de serrage (11) sont montés de manière à pouvoir être ajustés.

6. Dispositif de nettoyage selon au moins l'une des revendications précédentes, caractérisé en ce que les moyens de serrage (11) sont configurés comme bras de serrage (17, 18) débordant du support transversal (14) essentiellement à la perpendiculaire, et qui, dans leur position de serrage, viennent se placer contre des parties essentiellement opposées l'une à l'autre d'une surface de roulement (19) de la roue (2).

7. Dispositif de nettoyage selon au moins l'une des revendications précédentes, caractérisé en ce que chaque bras de serrage (17, 18) présente à son extrémité libre (20) une mâchoire de serrage (21) qui peut être placée contre la surface de roulement (19) de la roue (2).

8. Dispositif de nettoyage selon au moins l'une des revendications précédentes, caractérisé en ce que la mâchoire de serrage (21) présente une surface de pose (22) à courbure concave,

9. Dispositif de nettoyage selon au moins l'une des revendications précédentes, caractérisé en ce que la mâchoire de serrage (21) présente au moins deux brides de retenue (23) débordant des côtés opposés de la surface de contact (22).

10. Dispositif de nettoyage selon au moins l'une des revendications précédentes, caractérisé en ce que chaque bras de serrage (17, 18) est fixé sur un manchon coulissant (24, 25) apte à coulisser le long du support transversal (14).

11. Dispositif de nettoyage selon au moins l'une des revendications précédentes, caractérisé en ce que le support transversal (14) présente une section transversale polygonale.

12. Dispositif de nettoyage selon au moins l'une des revendications précédentes, caractérisé en ce que sensiblement au milieu du support transversal (14) est disposée une unité (26) à piston et cylindre se déplaçant solidairement avec les manchons coulissants (24, 25).

13. Dispositif de nettoyage selon au moins l'une des revendications précédentes, caractérisé en ce que l'unité (26) à piston et cylindre est disposée essentiellement à la perpendiculaire du support transversal (14) et est reliée aux manchons coulissants (24, 25) par l'intermédiaire de bras de liaison (27, 28).

14. Dispositif de nettoyage selon au moins l'une des revendications précédentes, caractérisé en ce que des unités (26) à piston et cylindre des dispositifs de réception (3,12) peuvent être actionnées simultanément.

15. Dispositif de nettoyage selon au moins l'une des revendications précédentes, caractérisé en ce que le dispositif de lavage (6) de la jante de roue (5) peut être conjugué à une roue (2) maintenue en position de nettoyage (8) par le dispositif de réception (3, 12).

16. Dispositif de nettoyage selon au moins l'une des revendications précédentes, caractérisé en ce que le dispositif de nettoyage (6) présente au moins une brosse fixe (30, 31) montée à rotation sur une paroi latérale (29) de la chambre de nettoyage (4).

17. Dispositif de nettoyage selon au moins l'une des revendications précédentes, caractérisé en ce que le dispositif de lavage (6) présente une contre-brosse (32, 33) montée à rotation et opposée à la brosse fixe (30, 31).

18. Dispositif de nettoyage selon au moins l'une des revendications précédentes, caractérisé en ce que la contre-brosse (32, 33) est montée de manière à pouvoir coulisser dans la direction de son axe de rotation (34).

19. Dispositif de nettoyage selon au moins l'une des revendications précédentes, caractérisé en ce que l'axe de rotation (34) est monté à une extrémité supérieure (35) d'un porte-brosse (36) disposé essentiellement au milieu entre deux dispositifs de réception (3, 12).

20. Dispositif de nettoyage selon au moins l'une des revendications précédentes, caractérisé en ce qu'une contre-brosse (32, 33) est montée à coulissement aux deux extrémités (37, 38) de l'axe de rotation (34).

21. Dispositif de nettoyage selon au moins l'une des revendications précédentes, caractérisé en ce que chaque contre-brosse (32, 33) est disposée sur une coiffe coulissante (39, 40) se déplaçant solidairement avec l'axe de rotation (34).

22. Dispositif de nettoyage selon au moins l'une des revendications précédentes, caractérisé en ce qu'à l'extrémité supérieure (35) du porte-brosse (36) est disposée une unité (41) à cylindre et piston se déplaçant solidairement avec les deux coiffes coulissantes (39, 40).

23. Dispositif de nettoyage selon au moins l'une des revendications précédentes, caractérisé en ce qu'un bras de liaison (42, 43) est disposé entre l'unité (41) à piston et cylindre et la coiffe coulissante (39, 40) respective.

24. Dispositif de nettoyage selon au moins l'une des revendications précédentes, caractérisé en ce qu'une extrémité du bras de liaison (42, 43), conjuguée à la coiffe coulissante (39, 40), est articulée sur une bague coulissante (44, 45) qui est montée sur la coiffe coulissante (39, 40) de manière à pouvoir tourner mais essentiellement immobile dans la direction axiale.

25. Dispositif de nettoyage selon au moins l'une des revendications précédentes, caractérisé en ce qu'en dessous du dispositif de réception (3, 12) positionné dans la position de nettoyage, une rampe d'expulsion (46) est disposée dans la chambre de nettoyage (4).

26. Dispositif de nettoyage comportant un caisson (47) entourant la chambre de nettoyage (4), lequel caisson présente au moins une ouverture d'introduction (48, 49) pour l'introduction d'une roue (2) et conjuguée à au moins l'un des dispositifs de réception (3, 12), selon au moins l'une des revendications précédentes, caractérisé en ce que le caisson (47) présente au moins une ouverture d'expulsion (51, 52) conjuguée à une extrémité d'expulsion (50) de la rampe d'expulsion (46).

27. Dispositif de nettoyage selon au moins l'une des revendications précédentes, caractérisé en ce que l'ouverture d'introduction (48, 49) et l'ouverture d'expulsion (51, 52) sont disposées l'une au-dessus de l'autre dans une paroi avant (53) du caisson (47).

28. Dispositif de nettoyage selon au moins l'une des revendications précédentes, caractérisé en ce qu'un guide-roue (54) est disposé à l'intérieur du boîtier (47) au moins d'un côté de l'ouverture d'introduction (48, 49) et/ou de l'ouverture d'expulsion (51, 52).

29. Dispositif de nettoyage selon au moins l'une des revendications précédentes, caractérisé en ce que le guide-roue (54) est configuré comme au moins un rouleau de guidage (55, 56) monté à rotation sur une paroi latérale du boîtier (47).

30. Dispositif de nettoyage selon au moins l'une des revendications précédentes, caractérisé en ce que deux rouleaux de guidage (55, 56) sont montés à rotation sur la paroi latérale, et leurs axes de rotation (57, 58) sont disposés sous un angle (59) aigu et sont orientés essentiellement en direction de l'axe de rotation (13) du dispositif de réception (3, 12).
